# FASCICULE DE BREVET EUROPEEN

(11) **EP 3 515 650 B1**
(45) Date de publication et mention de la délivrance du brevet: **04.08.2021**
(21) Numéro de dépôt: 17784351.3
(22) Date de dépôt: 19.09.2017
(51) Int. Cl.: B23K 26/03, B23K 26/06, B23K 26/38, B23K 26/388, B23K 26/21, B23K 26/14, B23K 26/082, B23K 103/00

(54) **DISPOSITIF ET PROCEDE DE GUIDAGE D'UN FAISCEAU LASER EN DEPLACEMENT ROTATIF ET LATERAL POUR FAIRE VARIER L'EXCENTREMENT DU FAISCEAU LASER**
VORRICHTUNG UND VERFAHREN ZUM LENKEN EINES LASERSTRAHLS HINSICHTLICH DER DREH- UND LINEARVERSCHIEBUNG ZUR ÄNDERUNG DER EXZENTRIZITÄT DES LASERSTRAHLES
DEVICE AND METHOD FOR GUIDING A LASER BEAM WITH A VIEW TO ROTATIONAL AND LINEAR DISPLACEMENT, IN ORDER TO VARY THE ECCENTRICITY OF THE LASER BEAM

(30) Priorité: 20.09.2016 FR 1658796
(43) Date de publication de la demande: 31.07.2019
(73) Titulaire: Renault S.A.S., 92100 Boulogne-Billancourt (FR); Industrial Laser Systems (I.L.S), 92170 Vanves (FR)
(72) Inventeur: ROUMADNI, Hichame, 28100 Dreux (FR); TIRADO, Lucio, 78170 La-Celle-Saint-Cloud (FR); MENDES, Manuel, 92190 Meudon (FR)
(74) Mandataire: Fédit-Loriot
(86) Numéro de dépôt international: PCT/FR2017/052509
(87) Numéro de publication internationale: WO 2018/055281

(56) Documents cités:
- DE-A1-102008 032 830
- JP-A- H03 285 785
- JP-A- H11 156 579
- US-A- 4 896 944
- US-A- 5 303 081
- US-A1- 2015 352 666

## Description

L'invention concerne les procédés de soudage laser, notamment ceux utilisant des boîtiers alimentés par une fibre par laquelle arrive la lumière à partir d'une source laser. Un tel boîtier peut être configuré pour collimater ou mettre en forme le faisceau sortant de la fibre, et pour le diriger vers un point d'impact souhaité du faisceau laser. Le point d'impact peut généralement être déplacé à partir du boîtier immobile, sur au moins une zone restreinte de la pièce à impacter par le faisceau.

Ces boîtiers sont généralement équipés d'une lentille de collimation permettant de rendre le faisceau parallèle au sortir de la lentille, et de miroirs galvanométriques motorisés réfléchissant le faisceau, aptes à être pilotés en inclinaison de manière à imposer une variété de trajectoires dans un plan. Dans la plupart des cas le faisceau est ensuite focalisé par une lentille à champ plat. On rappelle que de manière connue en soi, une lentille à champ plat est une lentille qui permet d'éviter les aberrations optiques de type courbure de champ de Petzval. Dans d'autres cas, comme sur ce projet, le faisceau est focalisé juste avant les miroirs galvanométriques.

Cependant l'inertie des miroirs rend difficile un pilotage à haute vitesse de la trajectoire du point d'impact du faisceau laser, que ce soit pour décrire une trajectoire 'festonnée', ou pour décrire des trajectoires rebouclant plusieurs fois sur elles-mêmes, telles que des trajectoires circulaires ou elliptiques.

Or un besoin se fait sentir de pouvoir utiliser des trajectoires décrivant des incursions de part et d'autre d'une ligne moyenne d'avancement du faisceau laser et/ou de pouvoir effectuer des points de soudure ponctuels -qui sont de fait obtenus en décrivant un petit cercle (d'un diamètre d'au plus quelques millimètres) à partir d'un point d'impact initial.

On connait notamment les documents JP H11 156579 (base pour le préambule de la revendication 1), US 4 896 944 A et JP H03 285785 A tous trois relatifs à des dispositifs de faisceaux lasers oscillants.

L'invention a pour but de proposer un procédé de pilotage d'un faisceau laser, permettant d'imposer au point d'impact du faisceau laser, des trajectoires circulaires, hélicoïdales, spiroïdales ou encore festonnées, sans être tributaire d'une inertie et des miroirs traditionnellement utilisés.

A cette fin il est proposé un dispositif pour guider une trajectoire d'impact laser tel que défini dans la revendication 1, comprenant un boîtier de soudage relié à une source laser, et agencé pour délivrer un faisceau laser sortant du boîtier, dont la position est pilotable par rapport au boîtier, le boîtier comprenant une lentille simple ou complexe, configurée pour mettre en forme un faisceau de lumière laser arrivant sur la lentille à partir de la source laser.

Le boîtier comprend en outre un mécanisme piloté permettant de mettre en rotation la lentille autour d'un premier axe parallèle à l'axe optique de la lentille, et écarté de l'axe optique de la lentille, de manière à faire décrire au faisceau laser sortant de la lentille, une trajectoire conique ou cylindrique ayant pour génératrice le faisceau laser.

Le faisceau de lumière laser peut avantageusement être transporté par une fibre en amont de la lentille. La lentille peut avantageusement être centrée sensiblement sur le premier axe, qui est l'axe de rotation du mécanisme piloté.

Par lentille complexe on entend un ensemble optique qui permet la mise forme du faisceau laser issu de la fibre. On désigne par plan de la lentille, le plan perpendiculaire à l'axe optique de la lentille.

Par fibre on entend ici un dispositif optique souple de conduction de lumière, qui peut comprendre une ou plusieurs fibres optiques par exemple.

Avantageusement, le mécanisme piloté est configuré pour pouvoir être notamment contrôlé en vitesse angulaire de rotation.

Le mécanisme piloté peut être de préférence configuré pour pouvoir imposer, dans une plage d'excentration donnée, une distance variable d'excentration entre le centre optique de la lentille et le premier axe.

De manière avantageuse, le dispositif est configuré pour que la distance d'excentration puisse varier de manière contrôlée au cours de la rotation de la lentille autour du premier axe.

De manière avantageuse, le mécanisme piloté est configuré pour pouvoir piloter simultanément la valeur d'excentration et la position angulaire et/ou la vitesse de rotation de l'axe optique de la lentille autour du premier axe.

Avantageusement, le mécanisme piloté est configuré pour permettre de faire varier dans une plage d'excentration donnée, de manière contrôlée, pendant la rotation de la lentille aussi bien que lors du maintien d'une position angulaire donnée de la lentille, une distance variable d'excentration séparant le centre optique de la lentille d'avec le premier axe.

Par exemple, le mécanisme piloté peut comprendre un élément d'actionnement apte à modifier, de manière contrôlée, pendant la rotation de la lentille aussi bien que lors du maintien d'une position angulaire donnée de la lentille, la distance variable d'excentration séparant le centre optique de la lentille d'avec le premier axe.

Selon un mode de réalisation, l'élément d'actionnement peut comporter un moteur, une unité de commande électronique, et une batterie rechargeable. Selon un autre mode de réalisation, l'élément d'actionnement peut comporter un moteur et une unité de commande alimentés par induction. L'unité de commande électronique peut être par exemple pilotable par une liaison sans fil de type Bluetooth, ou peut par exemple comporter un programme préenregistré de consignes de variation d'excentration au cours du temps.

Selon d'autres modes de réalisation, l'élément d'actionnement peut être remplacé par un système de réglage d'excentration permettant de modifier l'excentration en absence de rotation de la lentille, sans désassembler le système de maintien permettant de maintenir puis de mettre en rotation la lentille. On peut ainsi effectuer un réglage rapide d'excentration pour passer d'un schéma de balayage laser à un autre. Le réglage sans démontage permet de limiter les causes de pollution de portions ou d'interstices délicats formant la lentille ou le système de lentille.

Le mécanisme piloté peut avantageusement être configuré pour permettre simultanément de piloter la valeur d'excentration de l'axe optique de la lentille, et de piloter la position angulaire et/ou la vitesse de rotation de la lentille autour du premier axe.

Le boîtier comprend un carter dans lequel est maintenu le mécanisme piloté. Le mécanisme piloté du dispositif suivant l'invention, comprend les caractéristiques suivantes :
- un organe creux rotatif, entraîné en rotation autour du premier axe par rapport au carter, et placé de manière à être traversé en son centre par le faisceau laser envoyé vers la lentille,
- un système d'entraînement en rotation de l'organe creux rotatif, le système d'entraînement étant piloté en vitesse angulaire et/ou en vitesse de rotation,
- un support de maintien de la lentille, configuré pour être entraîné en rotation avec l'organe creux rotatif,
- au moins un élément d'actionnement, configuré pour être entraîné en rotation conjointement avec l'organe creux rotatif,

L'élément d'actionnement est configuré conformément à l'invention pour interagir avec le support de lentille de manière à pouvoir faire varier, de manière contrôlée, de préférence par des déplacements progressifs du support de lentille, aussi bien pendant la rotation de l'organe creux rotatif qu'en absence de rotation, une excentration du support de lentille et de la lentille par rapport au premier axe.

Selon un mode de réalisation préférentiel, l'élément d'actionnement est configuré conformément à l'invention pour pouvoir être déplacé axialement par rapport à l'organe creux rotatif pendant la rotation de l'organe creux rotatif, et est configuré pour imposer au support de lentille une valeur d'excentration qui est une fonction monotone continue du déplacement axial de l'élément d'actionnement par rapport à l'organe creux rotatif.

Le mécanisme piloté peut comprendre :
- un tube creux rotatif entraîné en rotation autour du premier axe, par exemple par sa périphérie, et placé de manière à être traversé en son centre par le faisceau laser issu de la source,
- une bague de maintien de la lentille, montée à coulissement transversal à une extrémité du tube, de manière à être solidaire en rotation avec le tube et à être guidée en translation par rapport au tube, sur au moins plusieurs millimètres perpendiculairement à l'axe du tube.

La bague de maintien peut être creusée, sur une portion de surface faisant face à l'espace intérieur au tube, d'au moins une rainure d'actionnement entaillant axialement la bague, et dessinant sur la portion de surface de la bague, une trajectoire de guidage permettant de guider au moins un ergot inséré axialement dans la bague.

Avantageusement, le mécanisme piloté comprend en outre un élément d'actionnement à ergot(s) guidé par un pas de vis à l'intérieur du tube pour être déplaçable par un mouvement combiné de rotation et de translation par rapport au tube. Avantageusement, l'axe de rotation de l'élément d'actionnement guidé par le pas de vis à l'intérieur du tube, est le même que l'axe de rotation du tube par rapport au boîtier.

Avantageusement, la rainure d'actionnement de la bague dessine sur la portion de surface de la bague, une trajectoire de guidage permettant de guider un ergot de l'élément d'actionnement pour que l'ergot se déplace au moins pour partie perpendiculairement à la direction de translation de la bague par rapport au tube. De cette manière, l'ergot peut exercer une pression, parallèle à la direction de translation de la bague, sur les parois latérales de la rainure, pendant le déplacement de l'ergot perpendiculairement à la direction de translation de la bague. La pression peut ainsi être exercée par l'ergot, de manière continue pendant la rotation de l'élément d'actionnement portant l'ergot.

Autrement dit encore, la bague peut être creusée sur une portion de surface radiale faisant face axialement à l'intérieur du tube, d'au moins une rainure d'actionnement entaillant la bague suivant la profondeur axiale de la bague,
et l'élément d'actionnement peut avantageusement comprendre au moins un ergot(s) formant relief axial, la bague et l'élément d'actionnement étant configurés pour que l'ergot, lors du déplacement de l'élément d'actionnement le long du pas de vis, soit guidé par la rainure de guidage, sur une portion de trajectoire compatible à la fois avec une longueur axiale de l'ergot, une profondeur axiale de la rainure, une étendue angulaire de la rainure, et un débattement autorisé transversalement à la bague par rapport au tube.

Avantageusement, la rainure est conçue pour que l'ergot se déplace, à un instant donné, lors de la rotation de l'élément d'actionnement, suivant une direction sensiblement perpendiculaire à la direction de translation de la bague, le mouvement de l'ergot présentant alors en outre, au moins une composante radiale par rapport à la bague, ladite composante radiale ayant une composante parallèle à la direction de translation de la bague relativement au tube. L'ergot peut alors exercer une pression sur le bord de la rainure de la bague pour amener le point qu'il occupe dans la rainure, vers un point de son cercle de rotation autour de l'axe du tube, provoquant ainsi la translation de la bague. Avantageusement une rainure de guidage d'au moins un des ergots peut définir une trajectoire sur la bague qui est une trajectoire intermédiaire - i.e. obtenue comme une série de barycentre de deux trajectoires- comprise entre un segment de droite perpendiculaire à la direction de translation de la bague, et une portion d'arc de cercle centrée sur la bague et interceptant le segment. Avantageusement, la rainure intercepte une ligne médiane de la bague parallèle à la direction de translation de la bague. En ce point de la rainure, la pression de l'ergot passe par le barycentre de la bague, et s'exerce de manière particulièrement efficace.

La rainure de guidage peut avantageusement définir une trajectoire qui, à partir d'un point origine de la rainure, s'éloigne continûment d'une trajectoire circulaire centrée sur un centre de la bague. Le point origine peut être ailleurs qu'à l'extrémité de la rainure. Autrement dit, la rainure s'éloigne continûment du cercle centré sur la bague, et passant par le point origine de la rainure.

Pour toutes chaque position de la bague coulissant perpendiculairement au tube, au moins une portion d'une rainure de guidage doit permettre d'imposer à au moins l'un des ergots, par rapport à la bague, une trajectoire qui est différente d'un arc de cercle centré sur l'axe du tube, afin que lors de la rotation du tube, l'ergot, en décrivant un arc de cercle dans le référentiel du tube, vienne appuyer sur le bord de la rainure pour déplacer la bague.

L'élément d'actionnement est de préférence évidé autour du premier axe pour laisser passer le faisceau laser envoyé vers la lentille. L'élément d'actionnement comprend au moins un ergot axial apte à être guidé par la rainure de guidage de la bague sur une portion de trajectoire compatible à la fois avec la longueur axiale de l'ergot, la profondeur axiale de la rainure, l'étendue angulaire de la rainure, la course de l'ergot définie par le pas de vis, et le débattement transversal de la bague par rapport au tube.

L'élément d'actionnement peut avoir la forme d'un deuxième tube inséré axialement dans le tube.

De cette manière, on peut, imposer, pendant la rotation du tube, une position axiale relative de l'élément d'actionnement par rapport au tube. On impose de ce fait une position angulaire de l'ergot par rapport à la rainure, configuration qui n'autorise à son tour qu'une position transversale de la bague par rapport au tube, cette position transversale déterminant l'excentration du centre optique de la lentille.

Le mécanisme piloté peut comprendre un carter de boîtier recevant en entrée un faisceau lumineux, au moins un premier dispositif de palier maintenant axialement et radialement le tube et autorisant sa rotation autour du premier axe, un moteur d'entraînement en rotation du tube par rapport au carter, un deuxième dispositif de palier solidaire axialement et radialement d'une extrémité axiale de l'élément d'actionnement dépassant du tube (du côté opposé à la bague), et une fourchette d'actionnement apte à imposer une position axiale variable du deuxième dispositif de palier par rapport au carter. Avantageusement, le déplacement de la fourchette est lui-même motorisé. Par palier on entend ici un dispositif permettant un soutien fixe d'un axe en rotation. Chaque dispositif de palier peut donc être aussi bien un palier lisse, qu'une succession de paliers lisses, qu'un roulement ou qu'une succession de roulements. Dans un mode de réalisation, le premier dispositif de palier comprend deux roulements radiaux fixes par rapport au boîtier du dispositif de soudage, et le deuxième dispositif de palier comprend un roulement radial mobile axialement en translation et porté par une fourchette d'actionnement.

Selon d'autres variantes de réalisation, le deuxième dispositif de palier par exemple peut être un palier axial configuré pour permettre à une fourchette d'appuyer sur l'élément d'actionnement, le retour axial de l'élément d'actionnement étant assuré par un dispositif de retour élastique. De tels dispositifs de retour élastique sont connus.

Selon encore d'autres variantes de réalisation, destinées par exemple à faire tourner la lentille essentiellement autour d'un axe vertical, le premier dispositif de palier peut comprendre un ou plusieurs paliers axiaux.

Le boîtier peut comprendre en outre un premier miroir partiellement réfléchissant par lequel est redirigé le faisceau issu de la lentille, et comprendre une caméra de contrôle placée derrière le miroir de manière à regarder au travers du miroir, sensiblement dans la direction suivant laquelle est redirigé le faisceau laser issu de la lentille. La caméra peut ainsi regarder une région autour du point d'impact final du faisceau laser, sans que la région observée par la caméra ne tourne avec le faisceau laser quand la lentille tourne sur elle-même.

Le boîtier peut comprendre au moins un deuxième miroir réfléchissant interposé dans le trajet du faisceau laser issu du premier miroir, le deuxième miroir étant piloté pour pouvoir être incliné autour d'un deuxième axe dans le référentiel du boîtier, de manière à faire varier suivant les génératrices d'un cône ou dans un plan, la direction du faisceau laser renvoyé par le deuxième miroir.

Le boîtier peut en outre comprendre un troisième miroir réfléchissant interposé dans le trajet du faisceau laser issu du deuxième miroir, et piloté pour pouvoir être incliné autour d'un troisième axe dans le référentiel du boîtier, de manière à, pour une position donnée du deuxième miroir, faire varier suivant les génératrices d'un cône ou dans un plan, la direction du faisceau laser renvoyé par le troisième miroir.

La caméra regarde donc le point d'impact du faisceau laser par réflexion sur le deuxième, et éventuellement sur le troisième miroir. La zone d'observation de la caméra se déplace donc en translation, quand le deuxième miroir et/ou le troisième miroir s'inclinent, les axes de la zone d'observation restant fixes par rapport aux directions d'un plan de travail vers lequel est envoyé le faisceau. Les axes de la zone d'observation de la caméra ne tournent pas quand le mécanisme piloté imprime un mouvement circulaire à la lentille.

Est également proposée une installation de guidage d'une trajectoire d'impact laser, comprenant un dispositif de guidage selon l'une quelconque des revendications précédentes, l'installation comprenant un bras robotisé portant le boîtier de soudage et apte à diriger le faisceau laser sortant du boîtier vers des point d'impact souhaités successifs, comprenant une unité de pilotage du boîtier apte à imposer au cours de la rotation de la lentille, une vitesse de rotation angulaire de la lentille ainsi qu'une excentration de la lentille constante et maîtrisée, ou une excentration de la lentille variable de manière maîtrisée, l'installation comprenant en outre une unité de surveillance configurée pour afficher ou enregistrer une suite d'images du point d'impact du faisceau laser.

La caméra peut être configurée pour que les axes de la zone d'observation de la caméra restent parallèles à eux-mêmes pour une position donnée du bras robotisé.

Il est également proposé un procédé de guidage d'une trajectoire d'impact d'un faisceau laser sortant d'un boîtier (voir la revendication 9), le procédé utilisant un dispositif de guidage conformément à l'invention, avec faisceau laser amené par une fibre et collimaté par une lentille. On imprime à la lentille une rotation autour d'un axe excentré par rapport au centre optique de la lentille.

Avantageusement, on surveille une zone de soudage impactée par le faisceau laser issu du boîtier, à l'aide d'un dispositif optique de surveillance dont le trajet optique d'acquisition d'image est indépendant de la lentille de collimation.

Dans ce procédé, on peut collimater par une lentille de collimation du boîtier, un faisceau laser entrant dans le boîtier et arrivant d'une source laser. On peut imprimer à la lentille une rotation autour d'un axe excentré par rapport au centre optique de la lentille. On pilote alors une variation progressive contrôlée d'excentration de la lentille, par moments pendant la rotation de la lentille, et par moments pour une position angulaire donnée de la lentille.

Le procédé peut être par exemple appliqué au soudage par point de pièces métalliques et/ou de pièces polymères, chaque point de soudage étant obtenu en décrivant, sur au moins une des pièces à souder, au niveau d'une zone d'impact du faisceau laser sortant arrivant du boîtier, sur au moins une des pièces à souder, un cercle, une ellipse, plusieurs cercles ou plusieurs ellipses superposés, ou une trajectoire en hélice, la trajectoire du faisceau laser sortant au niveau du point de soudage étant pilotée uniquement grâce à des mouvements de la lentille.

Selon un autre mode de réalisation, ou selon d'autres conditions opérationnelles, le procédé peut être appliqué au soudage linéaire de pièces métalliques et/ou de pièces polymères, la trajectoire au niveau d'une zone d'impact du faisceau laser sortant arrivant du boîtier, étant obtenue en combinant un déplacement linéaire du faisceau sortant, obtenu à l'aide de miroirs inclinables, et un déplacement rotatif du même faisceau sortant, obtenu grâce à des mouvements de la lentille.

Selon encore un autre mode de réalisation, ou selon d'autres conditions opérationnelles, le procédé peut être appliqué à la découpe d'orifices à profils coniques, la trajectoire, lors du perçage d'un des orifices coniques, du faisceau laser arrivant du boîtier, lors du perçage d'un trou étant pilotée uniquement grâce à des mouvements de la lentille.

Dans chacun de ces procédés, on peut avantageusement surveiller une zone de d'impact du faisceau laser, par un dispositif optique de surveillance dont le trajet optique d'acquisition d'image est indépendant de la lentille de collimation tournant autour de l'axe.

On notera que dans toute la description précédente, par miroir réfléchissant, on entend un miroir réfléchissant dans la longueur d'onde du faisceau laser, mais aussi dans d'autres longueurs d'ondes telles que celles du domaine visible ou du domaine infrarouge tels que les domaines de longueur d'onde auxquels est sensible la caméra. Par miroir semi réfléchissant, on entend un miroir qui réfléchit la lumière dans une ou plusieurs plages de longueurs d'onde prédéterminées, et qui laisse passer la lumière de manière transparente sur une autre ou sur d'autres plages de longueurs d'onde prédéterminées, comme par exemple une lame dichroïque.

Quelques buts, caractéristique et avantages de l'invention apparaîtront à la lecture de la description suivante, donnée uniquement à titre d'exemple non limitatif, et faite en référence aux figures annexées sur lesquelles :
La figure 1 montre un mode de base de réalisation de l'invention ;
La figure 2 illustre de manière schématique une installation de soudage laser utilisant un dispositif pour guider une trajectoire d'impact laser selon l'invention ;
La figure 3 illustre plus précisément le fonctionnement de l'installation illustrée par la figure 2 ;
La figure 4 est une vue schématique en perspective, d'un sous-ensemble du dispositif pour guider une trajectoire d'impact laser de la figure 1, destiné à mettre en rotation une lentille de collimation du dispositif, dans le plan de la lentille ;
La figure 5a et la figure 5b sont des vues schématiques en coupe d'un sous-ensemble du dispositif pour guider une trajectoire d'impact laser de la figure 1, illustrant les cinématiques relatives en translation et en rotation de quelques composants du sous ensemble.

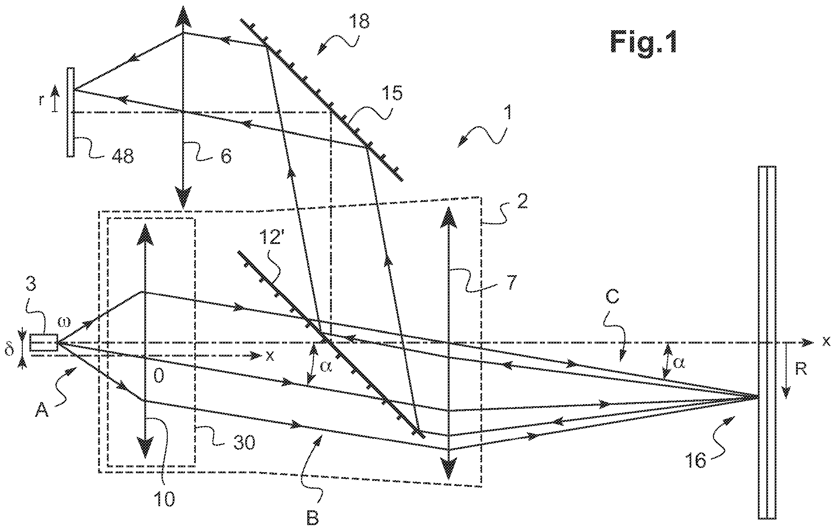

La figure 1 montre un mode de base de réalisation d'un dispositif 1 pour guider une trajectoire d'impact d'un faisceau laser, comprenant un boîtier de soudage 2 relié à une source laser par une fibre optique 3. Des rayons laser ayant des trajets multiples au cours de leur cheminement dans la fibre optique 3, génèrent en son extrémité, un faisceau A divergeant de lumière laser pénétrant dans le boîtier de soudage 2.

Le boîtier 2 comprend une lentille 10 convergente simple ou complexe. On entend par lentille complexe, tout module optique constitué éventuellement de plusieurs lentilles pour obtenir des caractéristiques optiques comparables à celle d'une lentille simple idéale. La lentille 10 est disposée dans un carter 30 de manière à ce que l'extrémité de la fibre optique 3 en regard du boîtier 2, soit dans un plan focal de la lentille 10. De la sorte, la lentille 10 est configurée pour collimater le faisceau A de lumière laser arrivant de la source laser pour obtenir un faisceau B de lumière laser de rayons parallèles entre eux.

En éloignant la lentille 10 de l'extrémité de la fibre optique 3, il est possible de faire converger le faisceau B sur une zone d'impact 16, située notamment à la surface d'une plaque que l'on veut souder sur une autre plaque par énergie de fusion apportée par la lumière laser.

Alternativement, le plan de la lentille 10 reste à distance fixe, égale à sa distance focale, de l'extrémité de la fibre optique 3 de façon à conserver le faisceau B de lumière laser parallèle. Dans cette variante, une lentille 7 convergente est placée à la suite de la lentille 10 de façon à obtenir un faisceau C convergeant sur la zone d'impact 16, alors placée sensiblement dans le plan focal de la lentille 7. Cette réalisation apporte une plus grande souplesse dans le réglage du point de convergence du faisceau C sur la zone d'impact 16, en ajustant la distance de la lentille 7, indépendamment de la distance entre la lentille 10 et l'extrémité de la fibre optique 3. Ainsi il est possible de faire pénétrer le point de convergence dans l'épaisseur du matériau à souder en déplaçant la lentille 7 en direction de la zone d'impact 16.

Considérant un axe ωx perpendiculaire au plan de la lentille 10, l'axe ωx prenant son origine ω sensiblement au centre de l'extrémité de la fibre optique 3, un placement du centre optique O de la lentille 10 sur l'axe ωx, produit alors un point ou une tache de lumière laser à l'intersection de l'axe ωx et de la zone d'impact 16. Cependant pour obtenir des caractéristiques mécaniques satisfaisantes au niveau du point de soudure, la zone de fusion de matière doit s'étendre sur une surface supérieure à une surface minimale dans le plan de la tôle.

Une solution pourrait consister à déplacer la lentille 10 ou la lentille 7 selon l'axe pour élargir suffisamment la tache de lumière laser sur la zone d'impact 16. Cependant, cette façon de procéder nécessite d'augmenter l'énergie du faisceau laser en proportion de l'augmentation de la surface d'impact, pour obtenir la fusion du matériau à souder.

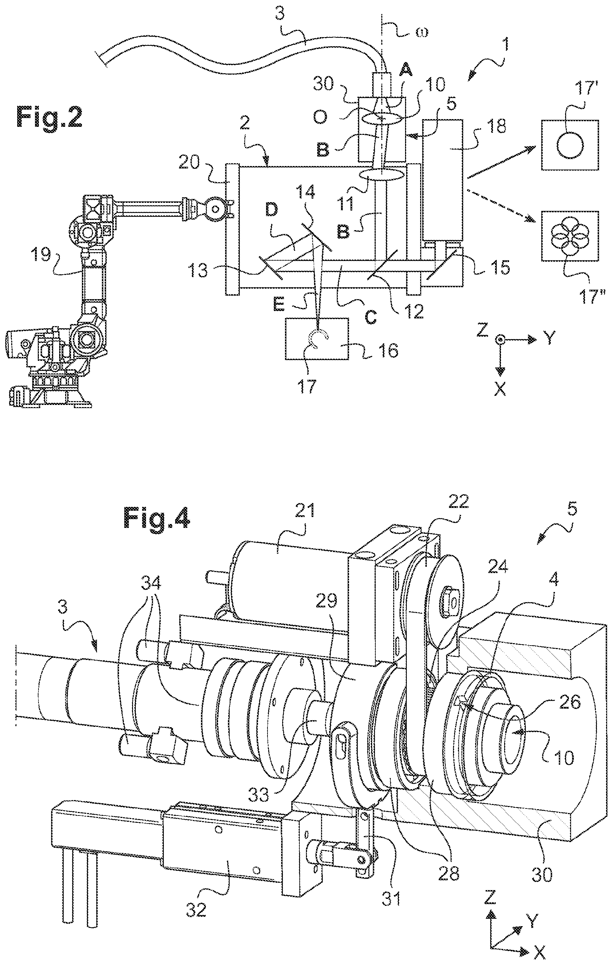

Une solution plus avantageuse consiste à rendre la lentille 10 solidaire d'un tube 24 mobile en rotation autour de l'axe ωx dans le carter 30 comme expliqué plus loin en référence à la figure 4. Le centre optique O de la lentille 10 est décalé par rapport à l'axe ωx de manière à définir un axe optique Ox de la lentille 10 parallèle à l'axe ωx. Ainsi les rayons du faisceau B de lumière laser sont parallèles au rayon qui passe par l'origine ω sur l'extrémité de la fibre optique et le centre O de la lentille 10, faisant un angle α avec l'axe ωx. Lorsque le centre du tube 24 tourne autour de l'axe ωx, le centre optique O de la lentille 10 décrit un cercle autour de l'axe ωx. De la sorte, le faisceau B de lumière laser balaye un anneau coplanaire à un cercle parcouru par le rayon passant par le centre optique O de la lentille 10 à une vitesse égale à la vitesse de rotation du tube 24. Le rayon lumineux qui passe par le centre optique de la lentille 7, conserve son angle α avec l'axe ωx de sorte que le point de convergence du faisceau C sur la zone d'impact 16 décrit un cercle de rayon R, déterminé par la base d'un cône décrit par des rayons lumineux passant par le centre optique de la lentille 7, lui-même fixé sur l'axe ωx.

Dans ce montage simple, si f₇ est la distance focale de la lentille 7 et f₁₀ est la distance focale de la lentille 10, lorsque l'on décale d'une distance δ l'axe Ox par rapport à l'axe ωx, la zone d'impact 16 se déplace lors de la rotation du tube 24, de manière à décrire un cercle de rayon R= δ · f₇/f₁₀ lorsque l'axe Ox tourne autour de l'axe ωx parallèlement à celui-ci.

La convergence du faisceau C sur la zone d'impact 16 génère une montée en température du point de convergence et par conséquent un rayonnement lumineux divergent représentatif de cette température, généralement dans le domaine des longueurs d'ondes infrarouges que l'on attend être celles de la température de fusion du matériau à souder.

Il est intéressant d'intercaler un miroir 12' semi-réfléchissant entre la lentille 10 et la lentille 7. Le miroir 12' est constitué d'une lame dichroïque qui est intégralement transparente dans la plage des longueurs d'onde auxquelles appartiennent les rayons laser et qui est intégralement réfléchissante dans la plage des longueurs d'ondes infrarouges et éventuellement des longueurs d'ondes visibles. De la sorte, la direction des rayons laser n'est pas perturbée par le miroir 12' qu'ils traversent intégralement.

En donnant à la surface de la lame dichroïque du miroir 12', un angle par exemple de 45° par rapport à l'axe ωx, les rayonnements issus de la zone d'impact 16 dans des longueurs d'ondes différentes de la longueur d'onde du faisceau laser, forment un faisceau parallèle à leur traversée en retour de la lentille 7, et qui est dévié par réflexion sur la lame dichroïque du miroir 12'.

Le miroir semi réfléchissant 12' permet de mettre en œuvre un dispositif 18 de surveillance optique, qui comprend notamment une lentille convergente 6 de distance focale f₆, simple ou complexe, pour faire converger les rayons émis à partir de la zone d'impact 16 sur un capteur 48 de caméra. Le capteur 48 permettra ainsi de mesurer un cercle de température de rayon r=δ · f₆/f₁₀ permettant d'évaluer la qualité de la soudure. Le dispositif 18 de surveillance optique peut comprendre un miroir réfléchissant 15 de renvoi d'angles.

Tel qu'illustré sur la figure 2, un dispositif de soudage 1, qui peut être monté sur un bâti fixe, sur un bâti mobile ou sur un système avec bras robotisé 19, comprend un boîtier de soudage 2 auquel est connecté une fibre optique 3 -ou un faisceau de fibres optiques 3- par lequel arrive de la lumière issue d'une source laser (non représentée). Le boîtier 2 permet ainsi de recevoir de la puissance lumineuse par la fibre 3, et de délivrer un faisceau lumineux « E » sortant du boîtier 2 en direction d'une zone d'impact 16, par exemple une zone d'une pièce à souder avec une autre. Le boîtier 2 peut être déplacé grâce à la souplesse de la fibre 3 pour modifier la zone d'impact 16 du faisceau E. Le boîtier 2 comprend un carter de boîtier 20 par lequel il peut être par exemple monté sur un dispositif mobile ou sur un bras robotisé 19. Le carter 20 peut être considéré comme définissant un référentiel propre aux divers éléments constituant le boîtier 2. Un premier faisceau lumineux « A » sortant de la fibre 3 est envoyé vers une lentille de collimation 10, de centre optique « O ». La lentille 10 est placée de manière à rendre le faisceau B sortant de la lentille sensiblement parallèle. La lentille 10 peut être un système optique plus complexe qu'une lentille simple -par exemple une suite de lentilles-, mais dans la description restera désignée par le terme générique de « lentille ». La lentille 10 peut être éventuellement complétée par une lentille 11, située à distance de la lentille 10, dont l'axe optique est de préférence parallèle à l'axe optique de la lentille 10. Les axes optiques des lentilles 10 et 11 peuvent être confondus, ou peuvent être décalés l'un par rapport à l'autre.

Les axes du boîtier 2 sont ici repérés par un premier axe « x » parallèle à l'axe optique de la lentille 10. La direction « x » se trouve être également sensiblement une direction moyenne de sortie de faisceau laser E du boîtier 2, mais pourrait différer de la direction de sortie du faisceau, par exemple si un nombre différent de miroirs réfléchissants était utilisé.

Sont également indiquées deux directions perpendiculaires « y » et « z » située dans le plan de la lentille, et qui restent fixes par rapport au carter 30 du mécanisme piloté et au carter 20 du boîtier 2.

Le faisceau B sortant de la lentille 10 -ou suivant les variantes de réalisation le faisceau B' sortant de la succession de lentilles 10 puis 11- est typiquement envoyé vers une lame dichroïque 12, qui assure notamment la fonction d'un premier miroir, semi-réfléchissant comme exposé plus haut. La lame dichroïque 12 peut ensuite renvoyer un faisceau réfléchi C, par exemple en direction d'un deuxième miroir, réfléchissant, 13. Selon les variantes de réalisation, le deuxième miroir réfléchissant 13 peut renvoyer un faisceau réfléchi D, par exemple vers un troisième miroir, réfléchissant, 14. la lame dichroïque 12 peut être typiquement fixe, et permet de placer dans le prolongement du faisceau C, derrière le miroir, une caméra ou un dispositif de surveillance optique 18. Le trajet optique d'observation de la caméra 18 peut lui-même dépendre d'un ou plusieurs miroirs complémentaires, par exemple un miroir 15.

Le faisceau optique B ou B' issu de la lentille 10 est donc renvoyé, pour sa partie réfléchie, sous forme d'un faisceau lumineux C, en direction du miroir mobile 13 qui est conçu pour pouvoir être incliné autour d'un premier axe, par exemple autour d'un premier axe perpendiculaire à la direction du faisceau C. Lors de l'inclinaison du miroir 13, le faisceau D dessine sur le miroir 14, si celui-ci est immobile, une ligne suivant une première direction dans le plan du miroir 14. Le miroir 14 peut être typiquement inclinable suivant une direction parallèle à cette ligne parcourue par le faisceau D. Il est ainsi possible, en combinant des angles d'inclinaison adéquats pour les miroirs 13 et 14, de balayer une surface sensiblement rectangulaire sur une zone d'impact 16 du faisceau E sortant du boîtier 2. Les miroirs 13 et 14, souvent désignés par le terme « miroirs galvanométriques » peuvent ainsi servir à déplacer la trajectoire 17 du point d'impact du faisceau E sortant du boîtier 2, sur une surface limitée notamment par l'inclinaison maximale des miroirs.

Lorsque la trajectoire comprend des points de rebroussement, obligeant un des miroirs à stopper sa course angulaire et à repartir angulairement dans la direction opposée, l'inertie des miroirs limite la vitesse linéaire à laquelle peut être déplacé le point d'impact du faisceau E.

En outre, l'observation par la caméra 18 se faisant par réflexion de l'image de la zone d'impact 16 sur les miroirs 13 et 14, la zone d'observation de la caméra se déplace en même temps que le point d'impact du faisceau E.

Si l'on souhaite par exemple faire décrire un ou plusieurs cercles au point d'impact du faisceau E à l'aide des seuls miroirs 13 et 14, les lentilles 10 et 11 restant fixes, c'est tout le fond d'observation de l'image qui décrit des cercles en même temps que le faisceau, ce qui conduit à des images difficiles à interpréter, surtout si la rotation est rapide. Ce type d'images, que l'on peut obtenir avec les dispositifs existants est représentée schématiquement sur la figure 1, indicée par la référence 17.

Dans le dispositif selon l'invention, on peut continuer à utiliser des miroirs galvanométriques par exemple 13, 14, pour déplacer le faisceau sortant E d'une zone à l'autre d'une pièce à impacter avec le faisceau laser.

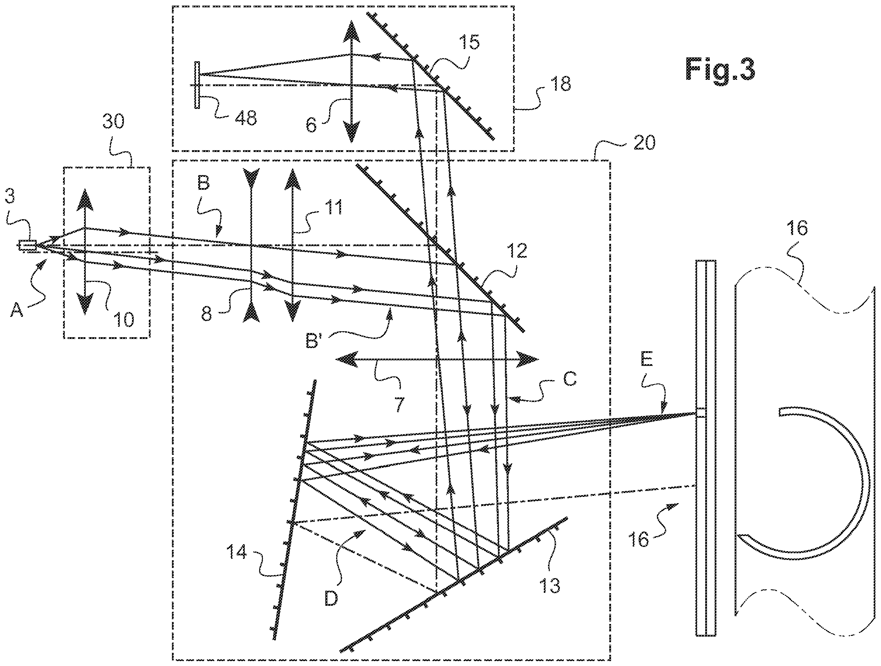

La figure 3 permet de mieux expliquer le fonctionnement du dispositif décrit en référence à la figure 2.

On retrouve sur la figure 3 la fibre optique 3, les lentilles 10, 7 simples ou complexes et la zone d'impact 16 de la figure 1 pour lesquelles les explications de la figure 1 restent valables.

Le miroir 12 est disposé de manière identique au miroir 12' de la figure 1. A la différence du miroir 12' de la figure 1, le miroir 12 est à réflexion totale dans le domaine des longueurs d'ondes laser et est transparent aux longueurs d'ondes infrarouges, de façon à réfléchir l'énergie des rayons laser vers la lentille 7, ici centrée sur un axe optique perpendiculaire à l'axe ωx dirigé de l'extrémité de la fibre 3 au miroir 12. Ceci permet de réfléchir le faisceau C convergeant arrivant de la lentille 7, vers le miroir réfléchissant 13 pour donner naissance au faisceau D qui vient se réfléchir sur le miroir 14 réfléchissant de façon à donner naissance au faisceau E dirigé vers la zone d'impact 16.

Les réflexions successives sur les miroirs 13 et 14 permettent d'obtenir un faisceau C+D+E de distance plus longue que le seul faisceau C de la figure 1 pour converger sur un point de la zone d'impact 16.

Ce montage a pour premier avantage de pouvoir utiliser une lentille 7 avec une distance focale f₇ supérieure à la distance focale f₇ de la lentille 7 de la figure 1. Ainsi, pour obtenir un cercle de rayon R de valeur identique à celui de la figure 1 sur la zone d'impact 16, on peut désaxer l'axe optique Ox de la lentille 10 avec un écart δ=R · f₁₀/f₇ plus faible que sur la figure 1, réduisant d'autant l'encombrement du carter 10 et la puissance utile pour faire tourner l'axe Ox autour de l'axe ωx à vitesse identique.

A chaque instant du parcours du point de convergence 16 du faisceau E sur le cercle résultant de la rotation de la lentille 10, la focalisation très fine des rayons laser sur la zone d'impact 16, provoque une montée en température du matériau. Pour chaque valeur T de température atteinte, le matériau réémet un faisceau divergent en sens inverse des faisceaux E, D et/ou C sur un spectre de longueur d'onde maximale λₘₐₓ inversement proportionnelle à la température T selon la loi de Wien. Une partie conséquente des rayons divergents ainsi réémis dans des longueurs d'ondes représentatives de la température atteinte sur le point de focalisation, suivent en sens inverse le même cheminement que les rayons laser convergents, jusqu'à la lentille 7 pour devenir parallèle à sa traversée avant d'atteindre le miroir 12.

Comme pour le miroir 12' de la figure 1, on peut réaliser le miroir 12 au moyen d'une lame dichroïque. Cependant à l'inverse de la lame dichroïque de la figure 1, on utilise pour le miroir 12 sur la figure 3, une lame dichroïque réfléchissante dans les longueurs d'ondes λ_{C} à haute énergie comme c'est le cas des rayons laser (typiquement 600vm<λ_{C}<1200vm) et transparente dans les longueurs d'ondes λ_{T} de plus faible énergie comme c'est le cas de celles qui reflètent des températures du matériau proches de sa température de fusion (typiquement 1,5µm<λ_{T}<3,5µm). De la sorte, les rayons lumineux émis depuis le matériau qui traversent la lentille 7, traversent aussi le miroir 12 semi réfléchissant pour pénétrer dans le dispositif 18 de surveillance optique de manière identique à celle de la figure 1.

En faisant varier progressivement l'écart δ entre l'axe Ox et l'axe ωx, entre de zéro et une valeur égale à R · f₁₀/f₇, le dispositif décrit permet d'obtenir un point de soudure de surface πR² avec un faisceau laser C ou E fortement focalisé de plus faible énergie qu'un faisceau laser dont une focalisation plus faible sur la zone d'impact permettrait d'obtenir directement une tache de rayon R.

Une orientation variable des miroirs 13 et 14 permet alors de modifier la position du point de soudure sans nuire ni à la focalisation du faisceau C ou E, ni à la perception par le dispositif 18 des rayons émis par la zone d'impact 16 en raison de sa température. Certain boîtiers galvanométriques existants pour réaliser cette dernière fonction, possèdent généralement déjà une lentille 11 préexistante pour collimater un rayon laser en sortie de fibre optique. Dans le cas d'utilisation d'un tel boîtier galvanométrique possédant une telle lentille 11 convergente, il convient d'intercaler une lentille 8 divergente entre la lentille 10 et la lentille 11 pour reproduire en entrée de la lentille 11 la divergence propre à une sortie de fibre optique.

L'invention propose de rendre mobile la lentille 10 pour piloter certains des déplacements du faisceau laser final.

Dans le dispositif selon l'invention illustré en figures 1 à 3, pour imposer des trajectoires de type circulaire au faisceau du laser sortant du boîtier 2, la lentille 10 de collimation est placée dans un mécanisme piloté, qui est schématisé sur les figures 1 à 3 par son carter 30, et qui permet de déplacer le centre optique O de la lentille dans un plan, autour d'un axe de rotation (ω, x) qui correspond à un axe de rotation du mécanisme piloté. Le faisceau B sortant de la lentille 10 prend alors des orientations successives le long des génératrices d'un cône, si bien que le point d'impact final du faisceau E décrit un cercle si la distance du centre optique O de la lentille par rapport à l'axe de rotation (ω, x) du mécanisme piloté reste constante.

La rotation de la lentille étant obtenue à l'aide de mécanismes de type roulements ou paliers, le plus souvent sans changement de direction de rotation, on s'affranchit ainsi des phénomènes d'inertie des miroirs, et on peut augmenter la vitesse de rotation imposée au faisceau sortant du boîtier.

Dans certaines variantes de réalisation, l'ensemble de dispositif de collimation permettant de retrouver un faisceau lumineux sensiblement parallèle peut être découplé en une première lentille 10 rotative et une seconde lentille 11 qui est fixe.

La surveillance de la zone d'impact 16 du faisceau E se fait au travers du miroir semi-réfléchissant 12.

La zone d'observation de la caméra se déplace avec les mouvements des miroirs 13 et 14, donc la zone d'observation reste fixe si l'on ne fait que déplacer ou faire tourner la lentille 10. Lors du déplacement du faisceau laser par la seule lentille 10, on obtient donc une image avec un fond d'image fixe, plus facile à surveiller et à interpréter qu'une image obtenue lorsque les miroirs 13 et 14 sont inclinés à grande vitesse. Une telle image sur fond fixe est représentée schématiquement sur la figure 1, indicée par la référence 17'.

La figure 4 est une représentation schématique de quelques éléments du mécanisme piloté 5 contenu dans le carter 30 et permettant de faire tourner la lentille 10, dans son plan et autour d'un axe (ω, x) excentré par rapport au centre optique O de la lentille.

Tel qu'illustré sur la figure 4, le mécanisme piloté 5 est maintenu par un carter 30 (représenté seulement en partie sur la figure 2), par lequel le mécanisme piloté 5 est positionné par rapport aux autres éléments du boîtier 2, notamment par rapport au carter 20 du boîtier 2.

La fibre optique 3 amenant l'intensité lumineuse, est tenue par son extrémité 33 par des éléments de maintien 34 permettant de maintenir l'extrémité de la fibre sensiblement parallèle par rapport à l'axe optique (O,x) de la lentille 10. La lentille 10 est portée par une bague de maintien 4 montée à l'extrémité d'un tube 24 sensiblement coaxial à l'extrémité 33 de la fibre 3. Le tube 24 et montée sur des roulements 28 lui permettant de tourner autour d'un axe (ω,x) par rapport au carter 30. Le tube 24 est mis en rotation à l'aide d'un moteur 21, par exemple le moteur 21 entraîne le tube 24 par sa circonférence extérieure à l'aide d'une courroie d'entraînement 22. D'autres mode d'entraînement sont envisageables, par exemple le moteur pourrait engrener avec une denture extérieure du tube 24 (variante non représentée).

Le tube 24 est évidé, c'est-à-dire creux en son centre, de manière à laisser passer le faisceau lumineux issu de l'extrémité 33 de la fibre 3 en direction de la lentille 10.

La bague 4 portant la lentille 10, et formant support de maintien de la lentille 10, est liée en rotation avec le tube 24 et est montée de manière à pouvoir se déplacer diamétralement, par rapport au tube 24, suivant une direction "u" liée au tube 24. A cet effet, la bague peut par exemple être conçue pour se déplacer diamétralement dans des encoches 26 assurant un guidage de la bague suivant une direction "u" perpendiculaire à l'axe de rotation (ω,x) du tube 24, le vecteur définissant la direction "u" tournant avec le tube 24.

La bague 4 peut par exemple se déplacer diamétralement avec une amplitude maximale de course diamétrale "e" -parfois appelée aussi jeu diamétral-.

A l'intérieur du tube 24, autour de la trajectoire du faisceau lumineux issu de la fibre 3 afin de ne permettre la transmission du faisceau, est disposé un actionneur 23, également désigné par élément d'actionnement 23. L'actionneur 23 peut par exemple comprendre un tube creux coaxial au tube 24. L'actionneur 23 coopère avec le tube 24 par un pas de vis, si bien qu'à une position axiale donnée de l'actionneur 23 dans le tube 24, correspond une position angulaire relative donné de l'actionneur par rapport à la direction du vecteur "u" tournant avec le tube 4.

L'élément d'actionnement 23 et le support de lentille 4 peuvent être configurés pour coopérer par un mécanisme à ergots. Ce mécanisme à ergot peut avantageusement permettre, en fonction de la position angulaire relative de l'actionneur 23 par rapport au tube 24, d'imposer une valeur d'excentration de la lentille 10 par rapport au tube 24, en obligeant la bague 4 à se déplacer suivant la direction "u" le long de l'encoche de guidage 26. La lentille 10 reste fixe par rapport à la bague 4, elle tourne donc avec la bague 4 et le tube 24, et son centre O est excentré par rapport à l'axe de rotation (ω,x) du tube, d'une valeur qui dépend de la position axiale de l'actionneur 23 à l'intérieur du tube.

L'actionneur 23 -non visible sur la figure 2 mais représenté sur la figure 23-, occupe une position axiale par rapport au tube 24, qui est imposée par une fourchette d'actionnement 31. Tel que représenté sur la figure 4, la fourchette 31 peut être mue par un dispositif d'actionnement 32, qui peut lui-même être motorisé.

La fourchette 31 peut maintenir axialement l'extrémité de l'actionneur 23, par exemple par un roulement ou un palier 29 qui est axialement mobile avec la fourchette, axialement lié à l'actionneur 23, mais qui autorise la rotation de l'actionneur 23. L'actionneur 23 peut ainsi tourner à la même vitesse angulaire que le tube 24 qui le contient, la position angulaire relative de l'actionneur 23 par rapport à la direction "u" du tube 24 étant imposée par la position axiale de la fourchette 31.

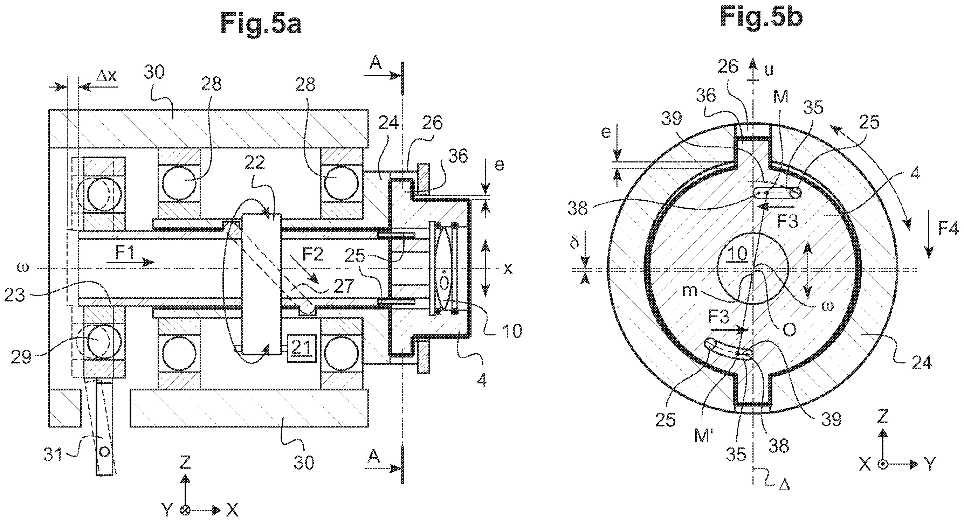

Les figures 5a et 5b illustrent de manière schématique, suivant deux coupes perpendiculaires l'une à l'autre, l'ensemble actionneur-tube-bague permettant d'imposer une excentration donnée au centre O de la lentille 10, par rapport à l'axe de rotation (ω,x) du tube 24 du mécanisme piloté 5.

La figure 5a est une vue schématique en coupe longitudinale, du tube 24, de l'actionneur 23, et de la bague de maintien 4 de la lentille 10.

La figure 5b est une vue schématique, en coupe transversale, de la bague 4, montrant le débattement diamétral de la bague 4 par rapport au tube 24, ainsi que les zones d'interaction entre la bague 4 et l'actionneur 23.

Tel qu'illustré sur la figure 5a, la bague 4 est montée à l'extrémité du tube 24 de manière à pouvoir se déplacer diamétralement sur une distance "e" suivant la direction particulière "u" du tube 24.

Comme illustré sur la figure 5b, la bague 4 peut être par exemple guidée par rapport à l'extrémité du tube 24, par des dents radiales 36 de la bague, venant s'insérer dans des encoches de guidage 26 ménagées diamétralement sur l'extrémité du tube 24.

La course de la bague 4 par rapport au tube 24, et le positionnement de la lentille 10 sur la bague, sont par exemple définis de manière à ce que le centre optique O de la bague puisse se déplacer d'une valeur comprise entre zéro et "e" d'un côté de l'axe de rotation (ω,x) du tube 24. On peut envisager des variantes de réalisations dans lesquelles le centre optique de la lentille peut être déplacé de part et d'autre de l'axe de rotation (ω,x), ou encore des variantes de réalisations dans lesquelles le centre optique de la lentille est toujours excentré au moins d'une valeur minimale par rapport à l'axe de l'axe de rotation (ω,x).

Le tube 24 est donc maintenu par les roulements 28, qui peuvent être par exemple encastrés dans le carter 30 du mécanisme piloté. Les roulements 28 imposent l'axe de rotation (ω,x) du tube 24.

L'actionneur 23 coopère avec le tube 24 par un pas de vis 27, qui permet en fonction de la position axiale de l'extrémité de la fourchette 31, d'imposer une position angulaire relative entre l'actionneur 23 et le tube 24. La fourchette 31 peut être par exemple reliée axialement à l'actionneur 23 au moyen d'un palier ou d'un roulement 29 qui est donc mobile par rapport au carter 30 du mécanisme piloté.

Quand le moteur 21 entraîne, à l'aide de la courroie 22, le tube 24, l'ensemble actionneur 23+tube 24+bague 4, tourne conjointement. Le moteur 21 et la courroie 22 font ainsi partie d'un système d'entraînement en rotation du tube 24. D'autres systèmes d'entraînement sont envisageables, par exemple un système d'entraînement comprenant un mécanisme d'engrenage (non représenté) engrenant avec une couronne dentée (non représentée) du tube. Le système d'entraînement en rotation peut comporter des fonctionnalités supplémentaires, tel un mécanisme de débrayage.

A chaque position axiale de l'actionneur 23, correspondant une position angulaire relative de l'actionneur 23 par rapport à la direction "u" tournant avec le tube 24.

Des rainures d'actionnement 35 sont ménagées sur la face arrière de la bague, c'est-à-dire sur la face de la bague faisant axialement face à l'extrémité de l'actionneur 23. Les rainures peuvent éventuellement traverser l'épaisseur de la bague.

A l'extrémité de l'actionneur 23, des ergots 25 solidaires de l'actionneur sont disposés de manière à pouvoir rester insérés dans des rainures 35 de la bague sur toute la course axiale prévue pour l'actionneur 23.

Les rainures 35 s'étendent à la surface de la bague, en formant une piste de guidage 38 pour chaque ergot 25 qui reste proche chacune d'un arc de cercle centré sur un même point Ω de la bague, en s'en éloignant de préférence de manière monotone à partir d'une extrémité de la piste.

A partie d'une première position angulaire de référence déterminée par une première position relative de l'actionneur 23 par rapport au tube 24, une rotation de l'actionneur 23 impose aux ergots 25 de suivre les pistes de guidage 38. Les pistes de guidage 38, pour un sens de rotation donnée, s'éloignent de préférence de manière monotone d'un centre d'action géométrique Ω de la bague 4, qui est conçu pour pouvoir être, pour une position particulière de l'actionneur 23, superposé au centre de rotation ω du tube 24.

Quand un ergot 25 parcourt la rainure 35 associée de la bague 4, suite à un changement de la position angulaire de l'actionneur 23, l'ergot 25 exerce une pression sensiblement radiale sur la rainure 35, pression qui comporte une composante positive ou négative, suivant la direction "u" le long de laquelle la bague 4 est apte à se déplacer par rapport au tube 24.

L'action des ergots force ainsi la bague 4 à se déplacer le long de la rainure 26.

Au moins une trajectoire de guidage 38 est de préférence différente d'un arc de cercle centré sur une zone centrale de la bague. Une trajectoire 38 peut être conçue de manière à s'éloigner de manière monotone, pour un sens angulaire donné de parcours de la trajectoire, d'une trajectoire fictive 39 en arc de cercle croisant la trajectoire de guidage 38, et centrée sur un point sensiblement central Ω de la bague. La trajectoire fictive 39 est une trajectoire qui ne permettrait d'obtenir aucun déplacement de la bague si ses rainures 35 étaient parcourues par des ergots se déplaçant en rotation autour du point Ω sensiblement central de la bague, l'ergot n'exerçant alors aucun effort sur les bords de la rainure dans la direction de déplacement souhaitée "u" de la bague 4. Une rainure parallèle à la direction "u" de déplacement souhaité, sur les extrémités de laquelle rainure un ergot 25 arriverait en butée pour une première et une seconde positions angulaires extrêmes de l'actionneur de la bague, est un des modes possibles de réalisation de l'invention, mais ne permettrait pas de doser de manière graduée le degré de translation de la bague.

Une rainure s'étendant au moins pour partie perpendiculairement à la direction de translation de la bague est préférable.

A titre d'exemple, on peut tracer sur la bague, deux trajectoires 38 pour deux ergots occupant deux positions diamétralement opposées l'un par rapport à l'autre sur l'actionneur, de la manière suivante : à partir d'une position initiale des ergots à la surface de la bague, on déplace linéairement le centre d'un segment MM' -dont la longueur MM' est la distance D entre les centres des deux ergots-, le long d'une ligne médiane Δ de la bague 4, Δ étant parallèle à la direction de déplacement u de la bague 4, en même temps que l'on fait pivoter angulairement le segment MM' autour de son centre m sur une course angulaire β. Le déplacement du centre m du segment doit être effectué dans un sens de déplacement suivant lequel la bague montée sur le tube, est apte à se déplacer par rapport au tube, et l'amplitude du déplacement doit correspondre à une amplitude autorisée par l'agencement bague-tube. Les points M et M' décrivent alors chacun une trajectoire que l'on peut imposer à l'un des ergots, et la distance parcourue par le centre m du segment correspond au déplacement imposé en translation à la bague lorsque l'actionneur impose une course angulaire β des ergots. Chacun des ergots décrit alors une trajectoire 38 par rapport à la bague, imposée par la rainure 35 correspondante, et une trajectoire 39 circulaire par rapport au tube. L'écart entre les trajectoires 38 et 39 induit à chaque étape de la rotation de l'actionneur par rapport au tube, un déplacement en translation de la bague perpendiculairement au tube.

L'enchaînement cinématique entre l'action de la fourchette 31, la position axiale de l'actionneur, la position angulaire des ergots, et l'excentration de la bague, est représentée sur les figure 3a et 3b par la succession de flèches F1, F2, F3 et F4.

Sur la figure 5a, F1 représente une action axiale de la fourchette 31 sur l'actionneur 23 qui est alors contraint par le pas de vis 27 de modifier sa position angulaire par rapport au tube 24 comme l'indique la flèche F2. Une extrémité du tube 24 formant organe creux rotatif, est alors déplacée axialement d'une valeur Δx, pendant que l'organe creux rotatif pivote d'un angle imposé par le pas de vis 27. Sur la figure 5a, l'extrémité de l'organe creux rotatif passe alors de la position représentée en pointillés à la position représentée en traits pleins. Les ergots 25 se déplacent alors angulairement comme l'indique la flèche F3 sur la figure 5b. Le déplacement angulaire des ergots 25, tend alors à déplacer la bague 4 parallèlement à la direction "u", par exemple suivant la direction indiquée par la flèche F4 si l'ergot 25 est déplacé dans le sens trigonométrique sur la figure 3b.

L'invention ne se limite pas aux exemples de réalisation décrits, et peut se décliner en de nombreuses variantes. Le dispositif peut ne comporter aucun miroir, ne comporter qu'un miroir semi réfléchissant d'observation, et/ou comporter un nombre de miroirs galvanométriques différent de 2. Le dispositif de contrôle d'excentration de la lentille rotative peut être différent de celui décrit. On peut envisager de faire tourner la lentille autour d'un axe qui n'est pas strictement parallèle à l'axe optique de la lentille. Le système peut comporter un dispositif d'au moins deux lentilles pour assurer la collimation du faisceau, dont une lentille fixe et une lentille tournante, le faisceau étant conçu pour ne redevenir parallèle qu'après avoir traversé les deux lentilles.

Le système de décalage diamétral de la bague de la lentille peut être différent de celui décrit, par exemple il peut comporter des ergots ou des reliefs sur la bague s'insérant dans des creux ou des rainures de guidage d'un actionneur. L'actionneur à ergot peut ne comporter qu'un ergot, ou comporter plus de deux ergots. Le recours à deux ergots diamétralement opposés facilite cependant la conception d'un jeu de rainures de guidage adaptées au jeu d'ergots. Lorsque l'actionneur comporte plusieurs ergots, pour l'un des ergots, la rainure de guidage peut être un arc de cercle centré sur la bague, à condition qu'au moins une autre rainure ne soit pas un tel arc de cercle.

La puissance laser peut être amenée vers la lentille rotative autrement que par l'intermédiaire d'une fibre, par exemple la source laser peut se trouver à proximité immédiate du dispositif.

On peut envisager une utilisation simplifiée sans caméra d'observation interposée dans le trajet optique du faisceau laser. Le pilotage de la vitesse angulaire de rotation de la lentille peut être conditionné par la pulsation effective de puissance du faisceau laser. On maitrise ainsi mieux la quantité d'énergie apportée pour chaque unité linéaire parcourue le long de la trajectoire théorique du faisceau.

Le dispositif peut être utilisé pour des applications de soudage, de marquage, mais aussi par exemple pour des applications de perçage d'orifices avec bords convergents, tels que des orifices d'injecteurs automobiles. Pour percer de tels orifices, le faisceau laser doit en effet se déplacer suivant les génératrices d'un cône dans l'espace, ce qui peut être obtenu à l'aide d'une lentille montée sur un mécanisme piloté selon l'invention.

Le procédé peut être appliqué au soudage par point de pièces métalliques et/ou de pièces polymères, chaque point de soudage étant obtenu en décrivant au niveau d'une zone d'impact du faisceau laser sur une ou plusieurs des pièces à souder, au moins un cercle, plusieurs cercles superposés, ou une trajectoire en hélice. La vitesse de rotation peut être adaptée pour que le temps nécessaire pour effectuer une rotation de la lentille corresponde à un nombre donné de pulsations de puissance du faisceau laser.

Des miroirs du boîtier de soudage peuvent permettre de déporter le faisceau laser vers un ou plusieurs points de soudage voisin, avant de déplacer ensuite le boîtier au moyen du bras robotisé vers des points de soudage plus distants

Le procédé peut être également appliqué au soudage linéaire de pièces métalliques et/ou de pièces polymères, la largeur de la zone fondue étant contrôlée à la fois par une vitesse linéaire d'avancement moyen du point d'impact du faisceau laser, et par une pulsation rotative du point d'impact par rapport à sa trajectoire linéaire moyenne. Il a en effet été montré qu'une ligne de soudage ainsi décrite avec des oscillations ou "wobulations" transversales, pouvait être énergétiquement plus efficace qu'une ligne de soudage avec même largeur de zone fondue obtenue avec un faisceau laser plus large.

Le procédé de soudage selon l'invention peut être avantageusement utilisé pour le soudage par transparence de deux pièces métalliques l'une sur l'autre, dans lequel on provoque une fusion voire une évaporation locale du métal au niveau du point d'impact du faisceau laser. L'évaporation locale du métal permet au faisceau laser de venir chauffer la pièce initialement masqué optiquement par la pièce du dessus, d'où le terme de soudage par transparence. Le diamètre de la zone fondue doit être contrôlé précisément, pour que suffisamment de métal fondu soit retenu par capillarité au niveau de la zone de liaison souhaitée entre les deux pièces, tout en venant au besoin comble un léger jeu d'assemblage entre les deux pièces.

Un pilotage du faisceau pour que le point d'impact décrive une hélice peut permettre d'obtenir une meilleure homogénéité du bain de fusion qu'un soudage avec point d'impact ponctuel ou point d'impact décrivant des cercles identiques successifs.

Le dispositif de guidage de faisceau laser selon l'invention peut être utilisé dans le cadre de diverses techniques de soudage, de marquage, de découpage ou autres applications. Le dispositif permet de décrire des cercles, des suites de cercle superposés, des trajectoires en hélice (l'excentration étant alors pilotée conjointement à la rotation de la lentille) ou encore de trajectoires festonnés obtenues en combinant des déplacements circulaires de la lentille et des déplacements linéaires à l'aide de miroirs galvanométriques.

Le dispositif de pilotage du faisceau laser selon l'invention permet de parcourir des trajectoires circulaires à très grande vitesse avec un dispositif piloté relativement simple à réaliser. Le dispositif permet en outre de positionner de manière adéquate une caméra pour obtenir une vision de la zone d'impact du faisceau qui se fait sur fond d'image sensiblement immobile, ce qui facilite l'observation et/ou le traitement des images et le suivi qualité du processus mis en œuvre à l'aide du faisceau laser.

## Revendications

1. Dispositif (1) pour guider une trajectoire d'impact d'un faisceau laser, le dispositif comprenant un boîtier de soudage (2) relié à une source laser (3),
le boîtier étant apte à délivrer un faisceau laser (C, E) en pilotant son orientation par rapport au boîtier (2),
le boîtier (2) comprenant une lentille (10) convergente simple ou complexe, configurée pour collimater un faisceau (A) de lumière laser arrivant de la source laser,
le boîtier (2) comprenant en outre un mécanisme piloté (5) permettant de mettre en rotation la lentille (10) autour d'un premier axe (ω,x) parallèle à l'axe optique (O,x) de la lentille (10) et écarté de celui-ci, de manière à faire décrire à un faisceau de lumière laser (B) sortant de la lentille (10), une surface cylindrique ou conique ayant pour génératrice le faisceau (B) de lumière laser,
**caractérisé en ce que** le boîtier (2) comprend un carter (30) dans lequel est maintenu le mécanisme piloté (5) ; ledit mécanisme piloté (5) étant configuré pour permettre de faire varier dans une plage d'excentration donnée, de manière contrôlée, pendant la rotation de la lentille aussi bien que lors du maintien d'une position angulaire donnée de la lentille, une distance variable d'excentration (δ) séparant le centre optique de la lentille (O) d'avec le premier axe (ω,x) ;
le mécanisme piloté (5) comprenant :
- un organe creux rotatif (24) entraîné en rotation autour du premier axe (ω,x) par rapport au carter, et placé de manière à être traversé en son centre par le faisceau laser (A) envoyé vers la lentille (10),
- un système d'entraînement en rotation (21, 22) de l'organe creux rotatif (24), le système d'entraînement étant piloté en vitesse angulaire et/ou en vitesse de rotation,
- un support (4) de maintien de la lentille (10), configuré pour être entraîné en rotation avec l'organe creux rotatif (24),
- au moins un élément d'actionnement (23) configuré pour être entraîné en rotation conjointement avec l'organe creux rotatif,
l'élément d'actionnement (23) étant configuré pour interagir avec le support (4) de lentille de manière à pouvoir faire varier, de manière contrôlée, aussi bien pendant la rotation de l'organe creux rotatif (24) qu'en absence de rotation, une excentration du support (4) de lentille et de la lentille (10) par rapport au premier axe (ω,x) ; et
l'élément d'actionnement (23) étant configuré pour pouvoir être déplacé axialement par rapport à l'organe creux rotatif (24) pendant la rotation de l'organe creux rotatif (24), et étant configuré pour imposer au support (4) de lentille une valeur d'excentration (δ) qui est une fonction monotone continue du déplacement axial (Δx) de l'élément d'actionnement (23) par rapport à l'organe creux rotatif (24).

2. Dispositif de guidage de faisceau laser selon la revendication 1, dans lequel le mécanisme piloté (5) est configuré pour permettre simultanément de piloter la valeur d'excentration (δ) de l'axe optique de la lentille, et de piloter la position angulaire et/ou la vitesse de rotation de la lentille (10) autour du premier axe (ω,x).

3. Dispositif de guidage de faisceau laser selon l'une des revendications 1 ou 2, dans lequel
- l'organe creux rotatif est un tube creux (24) monté à rotation par rapport au carter (30),
- le support de maintien de lentille est une bague (4) enserrant la lentille (10), la bague étant montée à coulissement transversal à une extrémité du tube (24), de manière à être solidaire en rotation avec le tube (24) et à être guidée en translation par rapport au tube (24), la translation de faisant perpendiculairement à l'axe (ω,x) du tube,
- l'élément d'actionnement (23) est guidé par un pas de vis (27) à l'intérieur du tube creux (24) pour être déplaçable par un mouvement combiné de rotation et de translation à l'intérieur du tube creux (24),

4. Dispositif pour guider une trajectoire d'impact d'un faisceau laser selon la revendication 3, la bague (4) étant creusée dans la profondeur d'une portion de surface radiale orientée vers l'intérieur du tube (24), d'au moins une rainure d'actionnement (35) entaillant la bague (4) suivant la profondeur axiale de la bague,
et l'élément d'actionnement (23) comprenant au moins un ergot(s) (25) axial, la bague et l'élément d'actionnement étant configurés pour que l'ergot, lors du déplacement de l'élément d'actionnement le long du pas de vis, soit guidé par la rainure de guidage (35), sur une portion de trajectoire compatible à la fois avec une longueur axiale de l'ergot (25), une profondeur axiale de la rainure (35), une étendue angulaire de la rainure (35), et un débattement (e) autorisé transversalement de la bague (4) par rapport au tube (24).

5. Dispositif de guidage de faisceau laser selon la revendication précédente, dans lequel ladite au moins une rainure (35) d'actionnement de la bague (4) dessine sur la portion de surface de la bague, une trajectoire de guidage permettant de guider un ergot (25) de l'élément d'actionnement (23) pour que l'ergot (25) se déplace au moins pour partie perpendiculairement à la direction (u) de translation de la bague (4) par rapport au tube (24).

6. Dispositif de guidage de faisceau laser selon la revendication 5, dans lequel le mécanisme piloté comprend
- un carter (20) du boîtier auquel est amené un faisceau lumineux (A) à partir de la source laser,
- au moins un premier dispositif de palier (28) maintenant axialement et radialement le tube (24) par rapport au carter (20), et autorisant la rotation du tube (24) autour du premier axe (ω,x),
- un moteur (21) d'entraînement en rotation du tube (24) par rapport au carter (20) autour de l'axe (ω,x),
- un deuxième dispositif de palier (29) solidaire axialement et radialement d'une extrémité de l'élément d'actionnement (23), et
- une fourchette d'actionnement (31) apte à imposer une position axiale variable au deuxième dispositif de palier (29) par rapport au carter (20).

7. Dispositif de guidage de faisceau laser selon l'une quelconque des revendications précédentes, dans lequel le boîtier (2) comprend en outre un premier miroir (12) partiellement réfléchissant, configuré pour renvoyer un faisceau réfléchi (C) par réflexion du faisceau (B, B') issu de la lentille (10), et comprend une caméra (18) de contrôle placée derrière le miroir (12) de manière à regarder au travers du miroir (12), sensiblement dans la direction du faisceau réfléchi (C) obtenu par réflexion du faisceau (B, B') issu de la lentille (10).

8. Dispositif de guidage de faisceau laser selon la revendication 7, dans lequel le boîtier (2) comprend au moins un deuxième miroir (13) réfléchissant interposé dans le trajet du faisceau laser (C) issu du premier miroir (12), le deuxième miroir (13) étant piloté pour pouvoir être incliné autour d'un deuxième axe (y) dans le référentiel du boîtier (2), de manière à faire varier suivant les génératrices d'un cône ou dans un plan, la direction du faisceau laser (D) renvoyé par le deuxième miroir (13).

9. Procédé de guidage d'une trajectoire d'impact d'un faisceau laser (E) sortant d'un boîtier (2) d'un dispositif de guidage de faisceau laser selon l'une quelconque des revendications 1 à 8, dans lequel on collimate par une lentille de collimation (10) du boîtier, un faisceau laser (A) entrant dans le boîtier et arrivant d'une source laser, et dans lequel on imprime à la lentille (10) une rotation autour d'un axe (ω,x) excentré par rapport au centre optique (O) de la lentille, **caractérisé en ce que** l'on pilote une variation progressive contrôlée d'excentration (δ) de la lentille (10), par moments pendant la rotation de la lentille (10), et par moments pour une position angulaire donnée de la lentille (10).

10. Procédé de guidage d'une trajectoire d'impact d'un faisceau laser (E), selon la revendication 9, appliqué au soudage par point de pièces métalliques et/ou de pièces polymères, chaque point de soudage étant obtenu en décrivant, sur au moins une des pièces à souder, au niveau d'une zone d'impact (16) du faisceau laser (E) arrivant du boîtier (2), un cercle, une ellipse, plusieurs cercles ou plusieurs ellipses superposés, ou une trajectoire en hélice, la trajectoire du faisceau laser (E) au niveau du point de soudage étant pilotée uniquement grâce à des mouvements de la lentille (10).

11. Procédé de guidage d'une trajectoire d'impact d'un faisceau laser (E), selon la revendication 9, appliqué au soudage linéaire de pièces métalliques et/ou de pièces polymères, la trajectoire au niveau d'une zone d'impact (16) du faisceau laser (E) arrivant du boîtier (2), étant obtenue en combinant un déplacement linéaire du faisceau (E), obtenu à l'aide de miroirs (13, 14) inclinables, et un déplacement rotatif du faisceau (E), obtenu grâce à des mouvements de la lentille (10).

12. Procédé de guidage d'une trajectoire d'impact d'un faisceau laser (E), selon la revendication 9, appliqué à la découpe d'orifices à profils coniques, la trajectoire, lors du perçage d'un des orifices coniques, du faisceau laser (E) arrivant du boîtier (2), étant pilotée uniquement grâce à des mouvements de la lentille (10).

13. Procédé de guidage d'une trajectoire d'impact d'un faisceau laser (E), selon l'une quelconque des revendications 9 à 12, dans lequel on surveille une zone d'impact du faisceau laser (E) par un dispositif optique de surveillance dont le trajet optique d'acquisition d'image est indépendant de la lentille de collimation (10) tournant autour de l'axe (ω,x).

## Patentansprüche

1. Vorrichtung (1) zum Lenken einer Auftreffbahn eines Laserstrahls, wobei die Vorrichtung ein mit einer Laserquelle (3) verbundenes Schweißgehäuse (2) umfasst,
wobei das Gehäuse imstande ist, einen Laserstrahl (C, E) durch Steuern seiner Ausrichtung in Bezug auf das Gehäuse (2) bereitzustellen,
wobei das Gehäuse (2) eine einfache oder komplexe Sammellinse (10) umfasst, die ausgelegt ist, um einen von der Laserquelle ankommenden Laserlichtstrahl (A) zu kollimieren,
wobei das Gehäuse (2) ferner einen gesteuerten Mechanismus (5) umfasst, der erlaubt, die Linse (10) um eine erste Achse (ω, x), die parallel zur optischen Achse (O, x) der Linse (10) und von dieser beabstandet ist, derart in Rotation zu versetzen, dass ein aus der Linse (10) austretender Laserlichtstrahl (B) eine zylindrische oder konische Fläche beschreibt, die als Mantellinie den Laserlichtstrahl (B) hat,
**dadurch gekennzeichnet, dass** das Gehäuse (2) einen Behälter (30) umfasst, in dem der gesteuerte Mechanismus (5) gehalten wird; wobei der gesteuerte Mechanismus (5) ausgelegt ist, um in einem gegebenen Exzentrierungsbereich während der Rotation der Linse als auch beim Aufrechterhalten einer gegebenen Winkelposition der Linse kontrolliert die Variation eines variablen Exzentrierungsabstand (δ) zu gestatten, der das optische Zentrum der Linse (O) von der ersten Achse (ω, x) trennt;
wobei der gesteuerte Mechanismus (5) umfasst:
- ein rotierendes Hohlorgan (24), das um die erste Achse (ω, x) in Bezug auf den Behälter rotatorisch angetrieben wird und derart platziert ist, dass es in seinem Zentrum von dem zu der Linse (10) gesendeten Laserstrahl (A) durchquert wird,
- ein Rotationsantriebssystem (21, 22) des rotierenden Hohlorgans (24), wobei das Antriebssystem in Winkelgeschwindigkeit und/oder in Rotationsgeschwindigkeit gesteuert wird,
- eine Halterung (4) der Linse (10), die ausgelegt ist, um mit dem rotierenden Hohlorgan (24) rotierend angetrieben zu werden,
- mindestens ein Betätigungselement (23), das ausgelegt ist, um gemeinsam mit dem rotierenden Hohlorgan rotierend angetrieben zu werden,
wobei das Betätigungselement (23) ausgelegt ist, um mit der Linsenhalterung (4) derart zu interagieren, dass sowohl während der Rotation des rotierenden Hohlorgans (24) als auch bei Abwesenheit einer Rotation eine Exzentrierung der Linsenhalterung (4) und der Linse (10) in Bezug auf die erste Achse (ω, x) kontrolliert variierbar ist; und
wobei das Betätigungselement (23) ausgelegt ist, um in Bezug auf das rotierende Hohlorgan (24) während der Rotation des rotierenden Hohlorgans (24) axial verlagerbar zu sein, und ausgelegt ist, um die Linsenhalterung (4) einem Exzentrierungswert (δ) zu unterwerfen, der eine kontinuierliche monotone Funktion der axialen Verlagerung (Δx) des Betätigungselements (23) in Bezug auf das rotierende Hohlorgan (24) ist.

2. Vorrichtung zum Lenken eines Laserstrahls nach Anspruch 1, wobei der gesteuerte Mechanismus (5) ausgelegt ist, um das Steuern des Exzentrierungswerts (δ) der optischen Achse der Linse und das Steuern der Winkelposition und/oder der Rotationsgeschwindigkeit der Linse (10) um die erste Achse (ω, x) gleichzeitig zu erlauben.

3. Vorrichtung zum Lenken eines Laserstrahls nach einem der Ansprüche 1 oder 2, wobei
- das rotierende Hohlorgan ein hohles Rohr (24) ist, das in Bezug auf den Behälter (30) rotatorisch angebracht ist,
- die Linsenhalterung ein Ring (4) ist, der die Linse (10) umschließt, wobei der Ring an einem Ende des Rohrs (24) derart transversal gleitend angebracht ist, dass er mit dem Rohr (24) rotierend fest verbunden ist und in Bezug auf das Rohr (24) translatorisch geführt wird, wobei die Translation senkrecht zur Achse (ω, x) des Rohrs erfolgt,
- das Betätigungselement (23) von einer Schraubensteigung (27) im Inneren des hohlen Rohrs (24) gelenkt wird, um durch eine kombinierte Rotations- und Translationsbewegung im Inneren des hohlen Rohrs (24) verlagerbar zu sein.

4. Vorrichtung zum Lenken einer Auftreffbahn eines Laserstrahls nach Anspruch 3, wobei der Ring (4) in der Tiefe eines radialen Oberflächenabschnitts in das Innere des Rohrs (24) zeigend ausgehöhlt ist, wobei mindestens eine Betätigungsrille (35) den Ring (4) gemäß der axialen Tiefe des Rings einkerbt,
und das Betätigungselement (23) mindestens einen axialen Stift(e) (25) umfasst, wobei der Ring und das Betätigungselement ausgelegt sind, damit der Stift bei der Verlagerung des Betätigungselements entlang der Schraubensteigung von der Führungsrille (35) über einen Abschnitt der Bahn geführt wird, der sowohl mit einer axialen Länge des Stifts (25), einer axialen Tiefe der Rille (35), einer Winkelerstreckung der Rille (35) und einer transversal gestatteten Auslenkung (e) des Rings (4) in Bezug auf das Rohr (24) kompatibel ist.

5. Vorrichtung zum Lenken eines Laserstrahls nach vorangehendem Anspruch, wobei die mindestens eine Betätigungsrille (35) des Rings (4) auf dem Oberflächenabschnitt des Rings eine Lenkungsbahn zeichnet, die erlaubt, einen Stift (25) des Betätigungselements (23) zu lenken, damit sich der Stift (25) mindestens zum Teil senkrecht zur Translationsrichtung (u) des Rings (4) in Bezug auf das Rohr (24) verlagert.

6. Vorrichtung zum Lenken eines Laserstrahls nach Anspruch 5, wobei der gesteuerte Mechanismus umfasst
- einen Behälter (20) des Gehäuses, zu dem ein Lichtstrahl (A) von der Laserquelle geführt wird,
- mindestens eine erste Lagervorrichtung (28), die das Rohr (24) in Bezug auf den Behälter (20) axial und radial hält und die Rotation des Rohrs (24) um die erste Achse (ω, x) gestattet,
- einen Rotationsantriebsmotor (21) des Rohrs (24) in Bezug auf den Behälter (20) um die Achse (ω, x),
- eine zweite Lagervorrichtung (29), die mit einem Ende des Betätigungselements (23) axial und radial fest verbunden ist, und
- eine Betätigungsgabel (31), die imstande ist, die zweite Lagervorrichtung (29) in Bezug auf den Behälter (20) einer variablen axialen Position zu unterwerfen.

7. Vorrichtung zum Lenken eines Laserstrahls nach einem der vorangehenden Ansprüche, wobei das Gehäuse (2) ferner einen ersten teilweise reflektierenden Spiegel (12) umfasst, der ausgelegt ist, um einen von der Linse (10) ausgehenden, durch Reflexion des Strahls (B, B') reflektierten Strahl (C) zurückzusenden, und eine hinter dem Spiegel (12) derart platzierte Kontrollkamera (18), dass sie durch den Spiegel (12) etwa in Richtung des reflektierten Strahls (C) blickt, der durch Reflexion des von der Linse (10) ausgehenden Strahls (B, B') erhalten wurde.

8. Vorrichtung zum Lenken eines Laserstrahls nach Anspruch 7, wobei das Gehäuse (2) mindestens einen zweiten reflektierenden Spiegel (13) umfasst, der auf dem Weg des vom ersten Spiegel (12) ausgehenden Laserstrahls (C) angeordnet ist, wobei der zweite Spiegel (13) gelenkt ist, um um eine zweite Achse (y) im Bezugssystem des Gehäuses (2) derart neigbar zu sein, dass die Richtung des von dem zweiten Spiegel (13) zurückgesendeten Laserstrahls (D) gemäß den Mantellinien eines Konus oder in einer Ebene variiert wird.

9. Verfahren zum Lenken einer Auftreffbahn eines aus einem Gehäuse (2) einer Vorrichtung zum Lenken eines Laserstrahls nach einem der Ansprüche 1 bis 8 austretenden Laserstrahls (E), wobei ein in das Gehäuse eintretender und von einer Laserquelle kommender Laserstrahl (A) von einer Kollimationslinse (10) des Gehäuses kollimiert wird und wobei die Linse (10) in eine Rotation um eine Achse (ω, x) versetzt wird, die in Bezug auf das optische Zentrum (O) der Linse versetzt ist, **dadurch gekennzeichnet, dass** eine kontrollierte progressive Exzentrierungsvariation (δ) der Linse (10) momentan während der Rotation der Linse (10) und momentan für eine gegebene Winkelposition der Linse (10) gesteuert wird.

10. Verfahren zum Lenken einer Auftreffbahn eines Laserstrahls (E) nach Anspruch 9, das auf das Punktschweißen von Metallteilen und/oder von Polymerteilen angewendet wird, wobei jeder Schweißpunkt durch Beschreiben, auf mindestens einem der zu schweißenden Teile, im Bereich einer Auftreffzone (16) des vom Gehäuse (2) kommenden Laserstrahls (E), eines Kreises, einer Ellipse, mehrerer Kreise oder mehrerer Ellipsen, die übereinanderliegen, oder einer Schraubenbahn erhalten wird, wobei die Bahn des Laserstrahls (E) im Bereich des Schweißpunkts nur dank der Bewegungen der Linse (10) gesteuert wird.

11. Verfahren zum Lenken einer Auftreffbahn eines Laserstrahls (E) nach Anspruch 9, das auf das Linearschweißen von Metallteilen und/oder von Polymerteilen angewendet wird, wobei die Bahn im Bereich einer Auftreffzone (16) des vom Gehäuse (2) kommenden Laserstrahls (E) durch Kombinieren einer linearen Verlagerung des Strahls (E), erhalten mit Hilfe von neigbaren Spiegeln (13, 14), und einer rotierenden Verlagerung des Strahls (E), erhalten dank von Bewegungen der Linse (10), erhalten wird.

12. Verfahren zum Lenken einer Auftreffbahn eines Laserstrahls (E) nach Anspruch 9, das auf das Ausschneiden von Öffnungen mit konischen Profilen angewendet wird, wobei die Bahn des vom Gehäuse (2) kommenden Laserstrahls (E) beim Durchbrechen von einer der konischen Öffnungen nur dank von Bewegungen der Linse (10) gesteuert wird.

13. Verfahren zum Lenken einer Auftreffbahn eines Laserstrahls (E) nach einem der Ansprüche 9 bis 12, wobei eine Auftreffzone des Laserstrahls (E) von einer optischen Vorrichtung überwacht wird, deren optischer Bildaufnahmeweg von der um die Achse (ω, x) drehenden Kollimationslinse (10) unabhängig ist.

## Claims

1. Device (1) for guiding a laser beam impact trajectory, the device comprising a welding housing (2) connected to a laser source (3),
the housing being able to deliver a laser beam (C, E) by controlling its orientation relative to the housing (2),
the housing (2) comprising a simple or complex converging lens (10), configured to collimate a laser light beam (A) arriving from the laser source,
the housing (2) further comprising a controlled mechanism (5) for rotating the lens (10) about a first axis (ω, χ) parallel to the optical axis (O,x) of the lens (10) and spaced apart from the latter, so as to cause a laser light beam (B) emerging from the lens (10) to describe a cylindrical or conical surface having the laser light beam (B) as its generatrix,
**characterised in that** the housing (2) comprises a casing (30) in which the controlled mechanism (5) is held; said controlled mechanism (5) being configured to make it possible to vary in a given eccentricity range, in a controlled manner, during the rotation of the lens as well as while maintaining a given angular position of the lens, a variable eccentricity distance (δ) separating the optical centre of the lens (O) from the first axis (ω,χ);
the driven mechanism (5) comprising:
- a rotary hollow member (24) driven in rotation about the first axis (ω,χ) relative to the casing, and positioned to be traversed through its centre by the laser beam (A) sent to the lens (10),
- rotary drive system (21, 22) of the rotary hollow member (24), the drive system being controlled in terms of angular speed and/or rotational speed,
- a support (4) for holding the lens (10), configured to be driven in rotation with the rotary hollow member (24),
- at least one actuating element (23) configured to be driven in rotation jointly with the rotary hollow member,
the actuating element (23) being configured to interact with the lens support (4) so as to be able to vary, in a controlled manner, both during the rotation of the rotary hollow member (24) and in the absence of rotation, an eccentricity of the lens support (4) and the lens (10) with respect to the first axis (ω,χ); and
the actuating element (23) being configured to be axially displaceable relative to the rotary hollow member (24) during the rotation of the rotary hollow member (24), and being configured to impose on the lens support (4) an eccentricity value (δ) which is a continuous monotonic function of the axial displacement (Δχ) of the actuating element (23) with respect to the rotary hollow member (24).

2. Laser beam guiding device according to claim 1, wherein the driven mechanism (5) is configured to simultaneously enable the eccentricity value (δ) of the optical axis of the lens to be controlled, and the angular position and/or speed of rotation of the lens (10) about the first axis (ω,χ) to be controlled.

3. Laser beam guiding device according to any of claims 1 or 2, wherein
- the rotary hollow member is a hollow tube (24) mounted to be rotatable relative to the casing (30),
- the lens holding support is a ring (4) enclosing the lens (10), the ring being mounted to slide transversely at one end of the tube (24), so as to be joined in rotation with the tube (24) and to be guided in translation with respect to the tube (24), the translation being performed perpendicular to the axis (ω,χ) of the tube,
- the actuating element(23) is guided by a thread (27) inside the hollow tube (24) to be movable by a combined rotational and translational movement inside the hollow tube (24).

4. Device for guiding an impact trajectory of a laser beam according to claim 3, the ring (4) being hollowed in the depth of a radial surface oriented towards the interior of the tube (24), with at least one actuating groove (35) notching the ring (4) along the axial depth of the ring,
and the actuating element (23) comprising at least one axial lug(s) (25), the ring and actuating element being configured such that the lug, during the displacement of the actuating element along the thread, is guided by the guiding groove (35), on a portion of the trajectory compatible with both an axial length of the lug (25), an axial depth of the groove (35), an angular extent of the groove (35), and a permitted transverse movement (e) of the ring (4) relative to the tube (24).

5. Laser beam guiding device according to the preceding claim, wherein said at least one groove (35) for actuating the ring (4) draws on the surface portion of the ring a guiding trajectory making it possible to guide a lug (25) of the actuating element (23) so that the lug (25) is displaced at least partly perpendicularly to the direction (u) of translation of the ring (4) with respect to the tube (24).

6. Laser beam guiding device according to claim 5, wherein the driven mechanism comprises
- a casing (20) of the housing to which a light beam (A) from the laser source is brought,
- at least one first bearing device (28) holding the tube (24) axially and radially with respect to the casing (20), and allowing the rotation of the tube (24) about the first axis (ω,χ),
- a motor (21) for driving in rotation the tube (24) relative to the casing (20) about the axis (ω,χ),
- a second bearing device (29) joined axially and radially at one end of the actuating element(23), and
- an activating fork (31) capable of imposing a variable axial position on the second bearing device (29) relative to the casing (20).

7. Laser beam guiding device according to any of the preceding claims, wherein the housing (2) further comprises a first partially reflecting mirror (12), configured to return a reflected beam (C) by reflection of the beam (B, B') from the lens (10), and comprises a monitoring camera (18) placed behind the mirror (12) so as to look through the mirror (12), substantially in the direction of the reflected beam (C) obtained by reflection of the beam (B, B') from the lens (10).

8. Laser beam guiding device according to claim 7, wherein the housing (2) comprises at least one second reflecting mirror (13) interposed in the path of the laser beam (C) from the first mirror (12), the second mirror (13) being controlled so as to be able to be inclined about a second axis (y) in the frame of reference of the housing (2), in such a way as to cause the direction of the laser beam (D) returned by the second mirror (13) to vary according to the generatrices of a cone or in a plane.

9. Method for guiding an impact trajectory of a laser beam (E) leaving a housing (2) of a laser beam guiding device according to any of claims 1 to 8, wherein a collimating lens (10) of the housing collimates a laser beam (A) entering into the housing and arriving from a laser source, and wherein a rotation about an eccentric axis (ω,χ) relative to the optical centre (O) of the lens is imprinted on the lens (10), **characterised in that** a controlled gradual variation in eccentricity (δ) of the lens (10) is controlled, at times during the rotation of the lens (10), and at times for a given angular position of the lens (10).

10. Method for guiding an impact trajectory of a laser beam (E), according to claim 9, applied to spot welding of metal and/or polymer workpieces, each welding spot being obtained by describing, on at least one of the workpieces to be welded, at an impact zone (16) of the laser beam (E) arriving from the housing (2), a circle, an ellipse, a plurality of circles or plurality of superimposed ellipses, or a helical trajectory, the trajectory of the laser beam (E) at the welding spot being controlled solely by movements of the lens (10).

11. Method for guiding an impact trajectory of a laser beam (E), according to claim 9, applied to the linear welding of metal and/or polymer workpieces, the trajectory at an impact area (16) of the laser beam (E) arriving from the housing (2), being obtained by combining a linear displacement of the beam (E), obtained by means of inclinable mirrors (13, 14), and a rotary displacement of the beam (E), obtained by means of movements of the lens (10).

12. Method for guiding an impact trajectory of a laser beam (E), according to claim 9, applied to cutting holes with conical profiles, the trajectory, during the piercing of one of the conical holes, of the laser beam (E) arriving from the housing (2), being controlled solely by movements of the lens (10).

13. Method for guiding an impact trajectory of a laser beam (E), according to any of claims 9 to 12, wherein an impact zone of the laser beam (E) is monitored by a monitoring optical device, the optical image acquisition path of which is independent from the collimating lens (10) turning about the axis (ω,χ).
